Europäisches Patentamt

European Patent Office

Office européen des brevets

(19)

(11) Numéro de publication: **0 074 320**
**B1**

(12) **FASCICULE DE BREVET EUROPEEN**

(45) Date de publication du fascicule du brevet:
09.04.86

(51) Int. Cl.⁴: **B 29 C 45/77**

(21) Numéro de dépôt: 82420119.8

(22) Date de dépôt: 20.08.82

(54) Procédé et dispositif de modulation de pression d'injection.

(30) Priorité: 21.08.81 FR 8116054

(43) Date de publication de la demande:
16.03.83 Bulletin 83/11

(45) Mention de la délivrance du brevet:
09.04.86 Bulletin 86/15

(84) Etats contractants désignés:
CH DE IT LI

(56) Documents cités:
DE - A - 2 429 874
FR - A - 2 002 419
FR - A - 2 467 431

(73) Titulaire: COOPELIN, Société à Responsabilité Limitée,
B.P. 172, F-38300 Bourgoin Jallieu (FR)

(72) Inventeur: Manceau, Marcel, 229, Avenue de Grammont,
F-37000 Tours (FR)
Inventeur: Jennet, Michel, Orgasin No. 1 Pont Saint
Michel, F-38300 Bourgoin Jallieu (FR)

(74) Mandataire: Ropital-Bonvarlet, Claude et al, Cabinet
BEAU DE LOMENIE 99, Grande rue de la Guillotière,
F-69007 Lyon (FR)

## Description

La présente invention concerne les machines à injecter les matières plastiques et elle concerne, plus particulièrement, le domaine de la modulation de la pression d'injection dans de telles machines.

Ainsi que cela est connu, les machines à injecter connues comportent un système de fermeture du moule et un système permettant l'injection de la matière plastique dans le moule. Ce système d'injection comprend une vis munie d'un clapet anti-retour et qui est mise en mouvement de translation pour l'injection. Cette vis peut être mue en rotation pour la plastification de la matière première chauffée à travers le fourreau de la vis. Un système hydraulique lié à une armoire de commande de la machine permet la programmation de cycle et de chauffage. Dans les procédés connus, des sondes de température sont placées dans le moule. Cependant, ces sondes sont toujours disposées, pour des questions d'encombrement, trop loin de chaque point de l'empreinte et donnent, en conséquence, des résultats très approximatifs.

De tels ensembles ne permettant pas de connaître exactement les variations des paramètres principaux, pression d'injection et température à chaque cycle d'injection. Ces variations incontrôlées et jusqu'à présent incontrôlables sont responsables d'abaissement de qualités mécaniques et de défauts géométriques ou esthétiques présentés par des pièces injectées qui doivent alors être rebutées.

L'objet de l'invention est de résoudre le problème ainsi posé en proposant des moyens de modulation de la pression d'injection.

Le but recherché est d'améliorer la qualité en mécanique, géométrie, aspect des pièces injectées tout en conférant avec le minimum de tensions internes un poids précis et régulier de la grappe injectée.

Le procédé suivant l'invention permet, avec des moyens tès modiques, sans recourir aux sondes de température dans les moules et en traduisant uniquement les différences de viscosité de la matière, d'obtenir des qualités d'injection constantes malgré les fluctuations dues aux différences de température des empreintes dans le moule, ainsi que de la température de la matière plastique pénétrant dans le moule.

La viscosité de la matière étant le résultat du refroidissement qui lui est imposé pendant l'écoulement dans le moule, il est beaucoup plus précis de se servir de cette viscosité et de la mesurer, par l'intermédiaire d'une mesure de pression, juste avant la fin de remplissage du moule pour appliquer les modifications de pressions nécessaires en fin de remplissage, tout en gardant la vitesse d'injection stable.

La présente invention concerne les moyens mis en oeuvre pour moduler la pression d'injection par un procédé de détection de pression d'injection agissant sur un système électronique d'affichage et de calcul avec un moyen de détection de pression placé avant la fin de la course de remplissage permettant, avec le calculateur, de mémoriser des erreurs "delta P" et de les introduire en mémoire pour les faire agir sur la pression de fin de remplissage, toutes ces commandes, augmentées des pertes de charges et frottements, étant traduites en pression (bars) sur le circuit hydraulique des machines à injecter les matières thermoplastiques, thermodurcissables ou élastomères.

Conformément à l'invention, le procédé de modulation de la pression d'injection en fin de remplissage d'un moule par une presse à injecter les matières plastiques du type comprenant une vis entraînée en rotation par un moteur lors de sa fonction de plastification et mue en déplacement axial à vitesse stabilisée lors de sa fonction d'injection par um vérin hydraulique à double effet consistant.

— à déterminer par approches successives la pression du vérin en fin d'injection d'une course d'injection correspondant à l'obtention d'une pièce moulée de bonne qualité à partir d'une matière plastique de viscosité donnée,
— à mémoriser cette valeur,
— à mesurer dans le même cycle, en un endroit précis de cette course, une valeur de prépression du vérin avant la fin d'injection,
— à mémoriser cette valeur de prépression en tant que valeur consigne,
— à prendre en compte, lors d'une course d'injection suivante, la valeur de prépression du vérin au même endroit de la course,
— à comparer cette valeur à la valeur consigne,
— à mesurer la différence $\Delta P$ en valeur absolue et en signe,
— à appliquer cette différence $\Delta P$ à la valeur de pression de fin d'injection mémorisée,
— et à laisser se dérouler la course d'injection jusqu'au moment où la pression réelle de fin d'injection coïncide avec la valeur de pression de fin d'injection corrigée.

L'invention vise, également, pour la mise en oeuvre du procédé ci-dessus, un dispositif de modulation qu'il de la pression d'injection en fin de remplissage d'un moule par une presse à injecter les matières plastiques du type comprenant une vis entraînée en rotation par un moteur lors de sa fonction de plastification et mue en déplacement axial à vitesse stabilisée lors de sa fonction d'injection par un vérin hydraulique à double effet comprenant:

— un capteur de pression dans la chambre du vérin responsable de la course d'injection de la vis,
— un capteur de position réglable commandé par le déplacement de la vis et disposé en amont de la position de fin d'injection,
— et un calculateur électronique comportant:
. une première mémoire de base recevant les informations du capteur de pression,
. une mémoire consigne susceptible d'être branchée sur la mémoire de base ou mise en relation, pour chaque actionnement du capteur de position en phase d'injection, avec un comparateur des informations reçues au même moment par la mémoire de base à partir du capteur de pression,
. un circuit de comptage-décomptage commandé par le comparateur,
. au moins un ensemble de réglage de la pression en fin d'injection associé à une mémoire branchée sur le circuit comptage-décomptage,
. un comparateur des données de la mémoire de l'ensemble de réglage avec les informations reçues par la mémoire de base,
. et un moyen commandé par ledit comparateur pour agir sur la pression du fluide hydraulique régnant dans ladite chambre du vérin.

Diverses caractéristiques de l'invention ressortiront de la description détaillée fait ci-dessous en référence aux dessins annexés.

La fig. 1 est un schéma synoptique de l'objet de l'invention.

La fig. 1a est un schéma synoptique partiel d'une variante.

La fig. 2 est un diagramme montrant certaines caractéristiques de l'invention.

La fig. 3 est un schéma explicatif de l'un des éléments de l'invention.

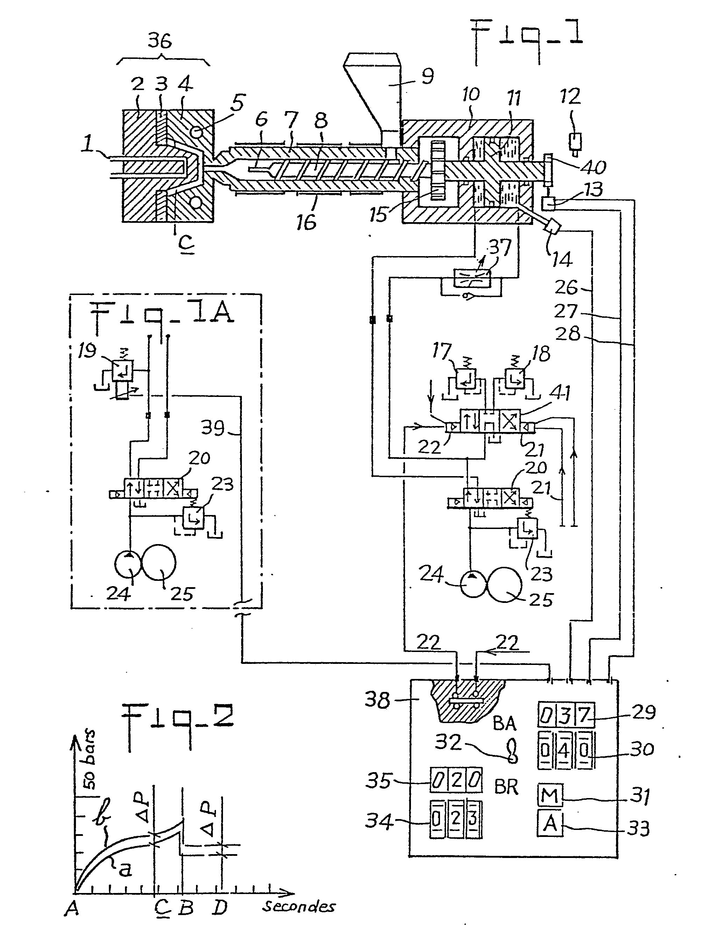

La fig. 1 montre un moule 36, une unité d'injection et un ensemble hydraulique.

Le moule 36 comporte une partie noyau 2, une partie éjection 3, une partie matrice 4 et des moyens 1 et 5 de refroidissement.

L'unité d'injection comporte, ainsi que cela est connu, un cylindre 7 chauffé par des résistances 16 dont l'alimentation est régulée par une armoire de contrôle. Une vis 8 est logée dans le cylindre 7 associé à une trémie 9 d'alimentation en matière première. La vis 8 peut être entraînée en rotation par un pignon 15 et en translation par un vérin 10 à double effet comprenant un piston 11 associé, extérieurement au vérin 10, à une came 40 destinée à coopérer avec un contacteur 12.

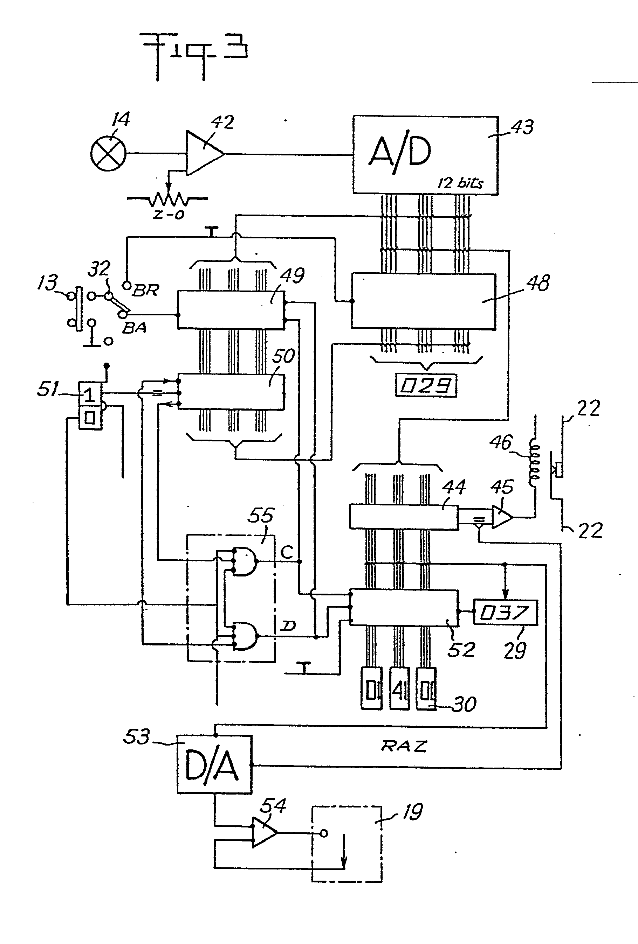

Selon l'invention, le vérin 10 est associé à un capteur de pression 14 sensible à la pression régnant dans la chambre dudit vérin responsable de la translation en phase d'injection de la vis 8. Un capteur de piston 13 réglable est monté pour coopérer avec la came 40 avant la fin de course d'injection de la vis 8. Si la course totale d'injection est définie par A et B à la fig. 2, la position du capteur 13 est réglée pour correspondre par exemple au point C (fig. 1 et 2). Les capteurs 13 et 14 sont reliés électriquement à un calculateur électronique 38 par des conducteurs 27—28 et 29 respectivement.

Le circuit hydraulique d'alimentation du vérin 10 peut avoir deux schémas différents, non limitatifs, chacun d'eux passant par une vanne de régulation de vitesse d'injection 37. Le premier schéma (fig. 1) s'applique aux machines avant des régulateurs de pression d'injection 17 et 18 à réglage manuel contrôlant une première pression bloquée à la valeur maximale et une deuxième pression réglable, ces deux régulateurs étant mis en action par l'intermédiaire du distributeur 41 ayant une bobine de commande 22 pour le régulateur 17 et une bobine 21 pour le régulateur 18. Le deuxième schéma (fig. 1a) inclut, en remplacement des régulateurs 17 et 18, un régulateur de pression 19 à action proportionnelle relié au calculateur 38 par un conducteur 39.

Dans les deux cas, l'alimentation en fluide hydraulique est assurée par un moteur électrique 25 faisant tourner une pompe 24 avec un limiteur de pression en sécurité 23 et un distributeur à trois positions 20 pour l'injection et le retour éventuel du vérin.

Le calculateur 38 porte en façade des boutons marche-arrêt 31 et 33 et une clé 32 de mise en réglage ou de marche en automatique. Il porte à droite, un ensemble de réglage de première pression ou pression d'injection avec des roues codeuses 30 et un affichage 29. Il porte à gauche, un ensemble de réglage de deuxième pression ou pression de maintien, avec les roues codeuses 34 et un affichage 35. Le calculateur 38 pourrait porter d'autres ensembles de pression et de maintien à des pressions affichées différentes avec un temporisateur sur chaque ensemble pour une pression de maintien en gradins.

La fig. 3 représente le calculateur 38 auquel est raccordé la capteur de pression 14 et le capteur de position 13 associé à le clé 32. Le calculateur comprend un amplificateur 42 amplifiant les informations du capteur 14 et suivi par un convertisseur 43 à douze bits. Ce convertisseur est relié à une mémoire 48 dont le transfert est raccordé à la borne réglage BR de la clé d'inversion 32. La borne BA de cette clé est raccordée à une mémoire 49 pouvant être comparée à la mémoire 48 par un comparateur 50 lors de chaque passage de la came 40 sur le capteur 13.

La sortie du comparateur 50 commande par une bascule 51 un circuit 55 — comptage-décomptage — à portes, qui attaque une mémoire 52 d'un circuit correcteur. Cette mémoire, 52 associée à l'ensemble de réglage, peut être comparée par un comparateur 44 à l'information fournie par le convertisseur 43 représentatif de la variation de pression dans le vérin 10. Le comparateur 44 commande par un amplificateur 45 un interrupteur 46 tel qu'un relais contrôlant l'alimentation de l'électrovanne 22 dans le cas de réalisation selon le schéma hydraulique de la fig. 1. Dans le cas de réalisation selon le schéma de la fig. 1a, le comparateur 44 agit sur un convertisseur 53 commandant par un amplificateur 54 un circuit RAZ interrompant l'alimentation de la bobine de a vanne proportionnelle 19.

Avant de faire intervenir le procédé de modulation, le régleur de la machine place la clé 32 sur BR de manière à isoler la mémoire 49 de la mémoire 48. Ensuite, il règle l'ensemble 30 pour afficher une pression donnée pour laquelle, approximativement, il escompte l'obtention d'une pièce moulée de bonnes qualités pour des paramètres donnés de vitesse d'injection stable et de température.

A la course d'injection subséquente, la mémoire 48 enregistre la prépression mesurée en C par le capteur 14 lors du passage de la came 40 sur le capteur 13, puis la pression de fin d'injection qui, lorsqu'elle coïncide avec celle réglée par l'ensemble 30 interrompt la course d'injection de la vis 8 par le comparateur 44.

Si la pièce obtenue n'est pas jugée bonne, le régleur régle de nouveau l'ensemble 30 et agit ainsi jusqu'à l'obtention d'une pièce bonne en considération des paramètres de vitesse stabilisée et de température.

A ce moment, le régleur passe la clé 32 en position BA ce qui transfère la valeur de prépression, correspondant à des conditions d'injection bonnes, dans la mémoire 49 et vide la mémoire 48. La valeur de fin d'injection reste affichée par l'ensemble 30.

La viscosité de la matière à injecter dépend de deux facteurs principaux: la vitesse d'injection et la température. La vitesse étant stabilisée comme dit ci-dessus, on conçoit que toute variation de température, principalement, influera sur la viscosité. Une telle variation est fonction du refroidissement lors de l'injection dans le moule lequel induira par ailleurs des pertes de charges plus ou moins importantes. Il s'ensuit donc que si une pression d'injection déterminée a été retenue pour obtenir une pièce bonne avec une viscosité donnée, toute variation de celle-ci se traduira par l'obtention d'une pièce moins bonne voire mauvaise.

Les moyens de l'invention vont permettre de moduler en conséquence la pression d'injection finale en fonction de la variation de viscosité.

La fig. 2 montre une courbe a correspondant à une variation de pression lors d'une course d'injection d'une pièce bonne.

A supposer que la température de la matière baisse et que le régulation chauffage n'intervienne pas immédiatement de façon homogène, la viscosité de la matière va croître.

Lors d'une course d'injection suivante, au moment de l'actionnement du capteur 13, le capteur 14 mesurera en C une prépression qui sera supérieure à celle stockée dans la mémoire 49, comme montré par la courbe b de la fig. 2. Le comparateur 50 comparera cette mesure avec le mesure de consigne de la mémoire 49 et calculera le ΔP correspondant en valeur et en signe. Par le bascule 51 et le circuit 55, ce ΔP sera appliqué à la mémoire 52 dont l'affichage traduira la nouvelle valeur retenue.

La course d'injection se poursuivra ainsi et la pression finale d'injection montera jusqu'au moment où le convertisseur 43 produira une valeur coïncidant avec le nouveau réglage de la mémoire 52. A ce moment, le comparateur 44 coupera l'alimentation du vérin 10.

De cette manière, la course d'injection fera toujours intervenir une même différence entre la prépression en C de la course et la pression finale en fin de course, Cette modulation de pression d'injection en fonction de la viscosité permettra par mesure par anticipation en C de corriger la pression finale en fin de course et d'obtenir des conditions d'injection produisant des pièces bonnes quelles qui soient les variations de viscosité de la matière.

La fig. 2 montre que la valeur ΔP sera prise en compte lors de l'application de la pression de maintien pendant la durée B—D selon le type de machine.

En d'autres termes, le procédé de l'invention consiste à prélever par le capteur de pression 14 une mesure de la pression développée dans le vérin 10 lors de l'injection et traduisant la viscosité de la matière en cours d'injection. Cette mesure est comparée à une valeur consigne de prépression d'une course d'injection de référence de manière à moduler et faire varier la pression finale d'une mesure correspondant en valeur et en signe à la différence entre la prépression de la course d'injection se déroulant et celle de la course de référence mémorisée.

Les moyens de l'invention sont prévus pour que lors de la course de retour en plastification de la vis 8, l'actionnement du capteur 13 ait pour effet de réintroduire dans la mémoire 52 la valeur de référence de l'ensemble 30.

Il y a lieu de noter que dans le cas où le circuit de commande comporte une vanne 19 proportionnelle, ou pourra répéter l'ensemble composé par 30, 52, 29, 53 et 55, autant de fois que souhaité, avec à chaque fois une autre valeur affichée pendant un certain temps (temporisation) et en lui appliquant à chaque cycle le "delta P" du premier moyen, pour obtenir une pression de maintien en gradins.

Sur la fig. 1, le calculateur 38 fait apparaître par l'ensemble 34 une pression de maintien plus basse que celle de fin d'injection affichée par l'ensemble 30. Ceci est normal car des pressions de maintien, plus élevées que la pression de fin d'injection, créent des tensions internes, généralement néfastes pour les pièces.

Il faut noter que dans les machines ayant un circuit hydraulique avec un deuxième distributeur 41 et des vannes de pression manuelles 17—18 selon la fig. 1, on pourra réguler la pression avec bloquage de la vanne 17 au maxi et appel de l'électrovanne 22 jusqu'à coupure à l'arrivée à la pression affichée au calculateur. Par contre, la deuxième pression dans ce casse fera par la méthode classique sur l'armoire machine elle-même, avec régulation de pression par réglage de 18 et appel de 21.

Il n'y aura pas dans ce cas de modulation en maintien de pression, comme il n'y aura pas de maintien de pression en gradins.

**Revendications**

1. Procédé de modulation de la pression d'injection en fin de remplissage d'un moule (36) par une presse à injecter les matières plastiques du type comprenant une vis (8) entraînée en rotation par un moteur (15) lors de sa fonction de plastification et mue en déplacement axial à vitesse stabilisée lors de sa fonction injection par un vérin hydraulique (10) à double effet consistant

— à déterminer par approches successives la pression du vérin (10) en fin d'injection correspondant à l'obtention d'une pièce moulée de bonne qualité à partir d'une matière plastique de viscosité donnée,
— à mémoriser cette valeur,
— à mesurer, dans le même cycle, en un endroit précis de la course d'injection, une valeur de prépression du vérin (10) avant la fin d'injection,
— à mémoriser cette valeur de prépression en tant que valeur consigne,
— à prendre en compte, lors d'une course d'injection suivante, la valeur de prépression du vérin (10) au même endroit de la course,
— à comparer cette valeur à la valeur consigne,
— à mesurer la différence ΔP en valeur absolue et en signe,
— à appliquer cette différence ΔP à la valeur de pression de fin d'injection mémorisée,
— et à laisser se dérouler la course d'injection jusqu'au moment où la pression réelle de fin d'injection coïncide avec la valeur de pression de fin d'injection corrigée.

2. Procédé selon la revendication 1, caractérisé en ce qu'on applique la différence ΔP à la pression de maintien exercée après la fin de la course d'injection.

3. Dispositif de modulation de la pression d'injection en fin de remplissage d'un moule (36) par une presse à injecter les matières plastiques du type comprenant une vis (8) entraînée en rotation par un moteur (15) lors de sa fonction de plastification et mue en déplacement axial à vitesse stabilisée lors de sa fonction d'injection par un vérin hydraulique à double effet, comprenant

— un capteur (14) de pression dans la chambre du vérin (10) responsable de la course d'injection de la vis (8),
— un capteur de position (13) réglable commandé par le déplacement de la vis et disposé en amont de la position de fin d'injection,
— et un calculateur électronique (38) comportant:

  . une première mémoire de base (48) recevant les informations du capteur de pression,
  . une mémoire consigne (49) susceptible d'être branchée sur la mémoire de base ou mise en relation, pour chaque actionnement du capteur de position (13) en phase d'injection, avec un comparateur (50) des informations reçues au même moment par la mémoire de base à partir du capteur de pression,
  . un circuit (55) de comptage-décomptage commandé par le comparateur (50),

  . au moins un ensemble (30) de réglage de la pression en fin d'injection associé à une mémoire (52) branchée sur le circuit comptage-décomptage (55),
  . un comparateur (44) des données de la mémoire (52) de l'ensemble de réglage (30) avec les informations reçues par la mémoire de base (48),
  . et un moyen (46—53—54) commandé par ledit comparateur pour agir sur la pression du fluide hydraulique régnant dans ladite chambre du vérin.

4. Dispositif de modulation selon la revendication 3, caractérisé en ce que le moyen commandé par le comparateur (44) est un contacteur électrique (46) contrôlant le circuit d'alimentation (22) d'un distributeur (41) d'alimentation de deux régulateurs de pression (17—18) à réglage manuel.

5. Dispositif de modulation selon la revendication 3, caractérisé en ce que le moyen commandé par le comparateur (44) est constitué par un convertisseur (53) contrôlant l'alimentation électrique d'une électrovanne (19) de réglage proportionnelle de la pression régnant dans ladite chambre du vérin.

6. Dispositif selon la revendication 3, caractérisé en ce que le calculateur (38) comprend au moins un ensemble (34) de réglage d'une pression de maintien après fin d'injection, ledit ensemble (34), associé à une mémoire (52) attaquée par le circuit comptage-décomptage (55) et à un comparateur (44) des informations reçues par la mémoire de base (48), étant placé sous la dépendance d'un temporisateur.

**Patentansprüche**

1. Verfahren zur Modulation des Spritzdrucks an Ende des Füllens einer Gießform (36) durch eine Presse zum Einspritzen von Kunststoffmassen der Bauart mit einer Schnecke, die während ihres Plastifizierungsbetriebs durch einen Motor (15) gedreht und während ihres Einspritzbetriebs durch einen doppeltwirkenden hydraulischen Stellzylinder (10) mit stabilisierter Geschwindigkeit axial verschoben wird, bestehend:

— im durch aufeinanderfolgende Annäherung erfolgendes Bestimmen des Drucks des Stellzylinders (10) am Einspritzende entsprechend der Herstellung eines gegossenen Teils von guter Qualität aus einer Kunststoffmasse von gegebener Viskosität,
— im Speichern dieses Werts,
— im im gleichen Zyklus an einem genauen Ort des Einspritzhubs erfolgenden Messen eines Vordruckwerts des Stellzylinders (10) vor dem Einspritzende,
— im Speichern diese Vordruckwerts als Sollwert,
— im während eines nachfolgenden Einspritzhubs erfolgenden Inbetrachtziehen des Vordruckswerts des Stellzylinders (10) am gleichen Ort des Hubs,
— im Vergleichen dieses Werts mit dem Sollwert,
— im Messen der Differenz ΔP als Absolutwert und mit Vorzeichen,
— im Übertragen dieser Differenz ΔP auf den gespeicherten Druckwert des Einspritzendes,
— und im Ablaufenlassen des Einspritzhubs bis zu dem Augenblick, in dem der tatsächliche Druck am Einspritzende mit dem korrigierten Druckwert am Einspritzende zusammenfällt.

2. Verfahren nach Anspruch 1, dadurch gekennzeichnet, daß man die Differenz ΔP auf dem Haltedruck überträgt, der nach dem Ende des Einspritzhubs ausgeübt wird.

3. Vorrichtung zur Modulations des Spritzdrucks am Ende des Füllens einer Gießform (36) durch eine Presse zum Einspritzen von Kunststoffmassen der Bauart mit einer Schnecke (8), die während ihres Plastifizierungsbetriebs durch einen Motor (15) gedreht und während ihres Einspritzbetriebs durch einen doppeltwirkenden hydraulischen Stellzylinder (10) mit stabilisierter Geschwindigkeit axial verschoben wird, enthaltend:

— einen in der Kammer des Stellzylinders (10) angeordneten Druckgeber (14), der auf den Einspritzhub der Schnecke (8) anspricht,
— einen einstellbaren Positionsgeber (13), der durch die Verschiebung der Schnecke gesteuert wird und in Bewegungsrichtung aufwärts von der Position des Einspritzendes angeordnet ist,
— und einen elektronischen Rechner (38) mit

. einem ersten Basisspeicher (48), der die Informationen des Druckgebers empfängt,
. einen Sollwertspeicher (49), der an den Basisspeicher angeschlossen oder bei jeder Betätigung des Positionsgebers (13) in der Einspritzphase mit einem Komparator (50) für Informationen in Beziehung gebracht werden kann, die ausgehend vom Druckgeber vom Basisspeicher empfangen werden,
. einen vom Komparator (50) gesteuerten Auf- und Abzählkreis (55),
. wenigstens eine der Einstellung des Drucks am Einspritzende dienende Anordnung (30), die mit einem am Auf- und Abzählkreis (55) angeschlossenen Speicher (52) verbunden ist,
. einen Komparator (44) zum Vergleich der Daten des Speichers (52) der Einstellanordnung (30) mit den vom Basisspeicher (48) empfangenen Informationen,
. une eine Einrichtung (40—53—54), die vom Komparator gesteuert wird, um auf den in der Kammer des Stellzylinders herrschenden Druck des Hydraulikfluids einzuwirken.

4. Modulationsvorrichtung nach Anspruch 3, dadurch gekennzeichnet, daß die vom Komparator (44) gesteuerte Einrichtung ein elektrischer Schalter (46) ist, der den Speisekreis (22) eines Verteilers (41) zur Speisung zweier Druckregler (17—18) mit Handeinstellung kontrolliert.

5. Modulationsvorrichtung nach Anspruch 3, dadurch gekennzeichnet, daß die vom Komparator (44) gesteuerte Einrichtung aus einem Wandler (53) besteht, der die elektrische Speisung eines Magnetventils (19) zur proportionalen Einstellung des in der Kammer des Stellzylinders herrschenden Drucks kontrolliert.

6. Vorrichtung nach Anspruch 3, dadurch gekennzeichnet, daß der Rechner (38) wenigstens eines Anordnung (34) zur Einstellung eines Haltedrucks nach dem Einspritzende aufweist, wobei diese Anordnung mit einem vom Auf- und Abzählkreis (55) beaufschlagten Speicher (52) und mit einem Komparator (44) für die vom Basisspeicher empfangenen Informationen verbunden ist und in Abhängigkeit von einem Zeitrelais steht.

## Claims

1. Process for modulating the injection pressure at end of filling of a mould (36) by an injection press for injecting plastic materials, of the type comprising a screw (8) driven in rotation by a motor (15) during its plasticizing function and actuated in axial displacement at stabilized speed during its injection function by a double-acting hydraulic jack (10) consisting in

— determining by successive steps the pressure of the jack (10) at the end of injection corresponding to the production of a moulded piece of good quality from a plastic material of given viscosity,
— in storing said value,
— in measuring, in a same cycle, in a specific place in the injection stroke, a prepressure value of the jack (10) before the end of injection,
— in storing said prepressure value as reference value,
— in taking into account, during the next injection stroke, the prepressure value of the jack (10) at the same place in the stroke,
— in comparing said value with the reference value,
— in measuring the difference ΔP in absolute value and in sign,
— in applying said difference ΔP to the stored pressure value of end of injection, and
— in allowing the injection stroke to proceed until that moment when the real pressure of end of injection coincides with the corrected pressure value of end of injection.

2. Process according to claim 1, characterized in that the difference ΔP is applied to the maintenance pressure exerted after the end of the injection stroke.

3. Device for modulating the injection pressure at the end of filling of a mould (36) by an injection press for injecting plastic materials, of the type comprising a screw (8) driven in rotation by a motor (15) during its plasticizing function and moved in axial displacement at stabilized speed during its injection function, by a double-acting hydraulic jack, comprising

— a pressure sensor (14) in the jack chamber (10) responsible for the injection stroke of the screw (8),
— an adjustable position sensor (13) controlled by the displacement of the screw and placed upstream of the position of end of injection,
— and a computer (38) comprising:

. a first basic memory (48) receiving the information from the pressure sensor,
. a reference memory (49) adapted to be connected to the basic memory or to be linked, for each actuating of the position sensor (13) in injection phase, with a comparator (50) of the information received at the same time by the basic memory from the pressure sensor,
. a count-count down circuit (55) controlled by the comparator (50),
. at least one assembly (30) for adjusting the pressure at end of injection, operationally coupled to a memory (52) connected to the count-count down circuit (55),
. a comparator (44) for comparing the information of the memory (52) of the adjusting assembly (30) with the information received by the basic memory (48),
. and means (46—53—54) controlled by said comparator to act on the pressure of the hydraulic fluid prevailing in said jack chamber.

4. Modulating device according to claim 3, characterized in that the means controlled by the comparator (44) is an electrical switch (46) controlling the circuit (22) supplying a hand-adjustable distributor (41) feeding two pressure regulators (17, 18).

5. Modulating device according to claim 3, characterized in that the means controlled by a comparator (44) is constituted by a convertor (53) controlling the electrical supply of an electrovalve (19) for adjusting in proportional manner the pressure prevailing in said jack chamber.

6. Device according to claim 3, characterized in that the computer (38) comprises at least one assembly (34) for adjusting a maintenance pressure after the end of injection, said assembly (34) associated with a memory (52), which is accessed by the count-count down circuit (55), and with a comparator (44) comparing the information received by the basic memory (48), being placed under the control of a timing device.

Fig.1

36

2 3 4

5

1

6 7 8

9

10 11

12

40

16

15

13

14

37

26

27

28

Fig.1A

19

17 18

41

39

22 21

20 23

20 21

24 23

24 25

25

22 22

Fig.2

38

BA

50 bars

32

b

ΔP

ΔP

29 | 0 3 7

30 | 0 4 0

35 | 0 2 0 | BR

a

31 | M

34 | 0 2 3

33 | A

A    C B  D    secondes

Fig 3